Europäisches Patentamt

European Patent Office

Office européen des brevets

(19)

(11) **EP 0 797 694 B2**

(12) **NEUE EUROPÄISCHE PATENTSCHRIFT**

(45) Veröffentlichungstag und Bekanntmachung des Hinweises auf die Entscheidung über den Einspruch:
**08.06.2005 Patentblatt 2005/23**

(45) Hinweis auf die Patenterteilung:
**26.08.1998 Patentblatt 1998/35**

(21) Anmeldenummer: **95942074.6**

(22) Anmeldetag: **07.12.1995**

(51) Int Cl.$^7$: **D01F 2/00**

(86) Internationale Anmeldenummer:
**PCT/EP1995/004808**

(87) Internationale Veröffentlichungsnummer:
**WO 1996/018760 (20.06.1996 Gazette 1996/28)**

(54) **LÖSUNGSMITTELGESPONNENE CELLULOSISCHE FILAMENTE**

SOLVENT-SPUN CELLULOSIC FILAMENTS

FILAMENTS CELLULOSIQUES FILES DANS UN SOLVANT

(84) Benannte Vertragsstaaten:
**AT CH DE ES FR GB IT LI NL**

(30) Priorität: **12.12.1994 DE 4444140**

(43) Veröffentlichungstag der Anmeldung:
**01.10.1997 Patentblatt 1997/40**

(73) Patentinhaber: **Cordenka GmbH**
**42103 Wuppertal (DE)**

(72) Erfinder:
• **BUDGELL, Derek**
**D-63906 Erlenbach (DE)**
• **PITOWSKI, Hans-Juergen**
**D-63897 Miltenberg (DE)**
• **WACHSMANN, Ulrich**
**D-63820 Elsenfeld (DE)**

(74) Vertreter: **Fett, Günter et al**
**CPW GmbH**
**Kasinostrasse 19-21**
**42103 Wuppertal (DE)**

(56) Entgegenhaltungen:
EP-A- 0 299 824          DE-A- 2 913 589
DE-C- 4 219 658

• GöTZE K.: 'Chemiefasern nach dem Viskoseverfahren', 3. Auflage, 1.Band (1967); Springer Verlag, Berlin; S. 223-229
• CHANZY H. ET AL: Polymer 31 (1990), S.400-405
• BERGER W.: Lenzinger Berichte 9/94, S.11-18
• Datenblatt D III/1/72 "Umrechnung verschiedener Grenzviskositätszahlen in Pw-Werte" (1972); Verein der Zellstoff-und Papier-Chemiker und -Ingenieure
• FENGEL D. ET AL: 'Wood: chemistry, ultrastructure, reactions', Walter de Gruyter & Co., Berlin (1983); S.40-43, 72-73
• PEEBLES L.H. jr.: 'Molecular weight distributions in polymers'; John wiley & Sons, New York; S. 40-41

EP 0 797 694 B2

**Beschreibung**

Die Erfindung betrifft lösungsmittelgesponnene cellulosische Filamente aus einer Lösung von Cellulose in einem tertiären Amin-N-oxid.

Die Publikation "Spinning of Cellulose from N-methyl morpholine-N-oxide in the presence of additives" von H. Chanzy, M. Paillet und R. Hagège (Polymer, 1990 Vol. 31, March, Seiten 400 bis 405) offenbart derartige Filamente (Fasern), die aus einer Lösung von Cellulose mit einem Polymerisationsgrad (DP) von 600 bzw. 5000 in dem tertiären Amin-N-oxid N-Methylmorpholin-N-oxid (NMMO) hergestellt wurden. Ausgehend von der Cellulose mit einem DP von 600 wurden Filamente erhalten, die eine Festigkeit von 0,5 GPa entsprechend 33,3 cN/tex und eine Bruchdehung von 16% aufwiesen. Beim Einsatz von Cellulose mit einem DP von 5000 betrug die Festigkeit 56,7 cN/tex (0,85 GPa) und die Bruchdehnung 4%.

Indem der Celluloselösung (DP 600) 2% Ammoniumchlorid ($NH_4Cl$) zugesetzt wurde, erhöhte sich die Festigkeit der daraus hergestellten Filamente auf 60 cN/tex (0,9 GPa). Die Bruchdehnung dieser Filamente betrug 8%. Bei Zugabe von Ammoniumchlorid oder Calciumchlorid zu den Lösungen der Cellulose mit einem DP 5000 wurden ebenfalls Filamente mit hoher Festigkeit (bis zu 87 cN/tex) erhalten, deren Bruchdehnung aber unter 5% lag. Die den Lösungen zugesetzten Salze ($NH_4Cl$ oder $CaCl_2$) waren in den Filamenten nicht mehr nachweisbar. Dieser Effekt sollte auf die für die Herstellung dieser Filamente typischen Verfahrensschritte: dem Durchlaufen eines wäßrigen Koagulationsbades zur Fällung der Cellulose im Anschluß an die Spinnung in einem Luftspalt und den sich dem Koagulationsbad anschließenden Waschbädern zurückzuführen sein. In diesen Bädern wird das Lösungsmittel NMMO aus den Filamenten entfernt. Im Hinblick auf die Angabe in obengenannter Publikation, daß in den Filamenten die Salze nicht mehr nachweisbar waren, ist davon auszugehen, daß sie bei diesen Behandlungsschritten aus den Filamenten herausgewaschen wurden.

Das Lösungsmittelspinnverfahren mit einem tertiären Amin-N-oxid als Lösungsmittel für die Cellulose zeichnet sich durch eine große Umweltfreundlichkeit aus, da das aus den Filamenten ausgewaschene Lösungsmittel praktisch vollständig zurückgewonnen werden kann und wieder zur Lösungsherstellung eingesetzt werden kann. Im Hinblick auf eine ökonomische Prozeßführung ist daher die Zugabe von Salzen zur Spinnlösung nachteilig, da die Rückgewinnung des tertiären Amin-N-oxids, wozu üblicherweise Ionenaustauscher eingesetzt werden, wesentlich schwieriger wird, da die Harze in den Ionenaustauschern mit Ionen der Salze gesättigt werden statt mit den gewünschten Abbauprodukten der Cellulose und des Amin-N-oxids, die neben dem tertiären Amin-N-oxid im Waschwasser vorliegen. Darüber hinaus führen Chloride zu einer Korrosion von Anlageteilen aus Stahl.

Neben diesen verfahrenstechnischen Nachteilen der Zugabe von Salzen zu der Celluloselösung weisen aber auch die resultierenden Filamente trotz ihrer hohen Festigkeit erhebliche Nachteile auf. Wie in obengenannter Publikation ausgeführt, hat die Zugabe von Salzen einen großen Einfluß auf die innere Morphologie der Filamente. Dabei wurde nicht nur eine Änderung der inneren Struktur gefunden, sondern es wurde auch eine Abnahme des Querzusammenhangs (lateral cohesion) im Vergleich zu den Filamenten gefunden, die ohne Zugabe von Salzen hergestellt wurden. Aufgrund dieser Tatsache führt jedes Reiben, Biegen oder wiederholtes Handhaben zu einer gravierenden Delaminierung der Filamente mit Freisetzung von mikrofibrillaren Flusen, die auch als Fibrillierung bezeichnet wird. Diese extrem starke Fibrillierung wurde an Filamenten, die ohne Zugabe von Salzen zur Spinnlösung hergestellt wurden, nicht beobachtet. Aufgrund dieser Eigenschaft sind die Filamente, die unter Zugabe von Salzen zu der Spinnlösung hergestellt wurden, für textile Anwendungen in der Regel nicht einsetzbar.

Diese Aufgabe wird durch lösungsmittelgesponnene cellulosische Filamente aus einer Lösung von Cellulose in einem tertiären Amin-N-oxid und gegebenenfalls Wasser mit einer Festigkeit von 52,7 bis 66 cN/tex, einer Bruchdehnung von 6 bis 13% und einer spezifischen Reißzeit von 300 bis 1000 s/tex gelöst.

Die Bruchdehnung der Filamente kann auch 6 bis 9,7% bzw. 6 bis 9,5% oder 6 bis 9% betragen. Bevorzugte spezifische Reißzeiten betragen 304 bis 767 s/tex. Die Cellulose, die in dem tertiären Amin-N-oxid gelöst wird, ist vorzugsweise ein Südkiefer-Zellstoff.

Gemäß dem Stand der Technik oben erläuterter Publikation sind Filamente bekannt, die eine Festigkeit von 33,3 cN/tex und eine Bruchdehnung von 16% aufweisen (DP 600) bzw. 56,7 cN/tex bei einer Bruchdehnung von 4% (DP 5000). Durch Zugabe von $NH_4Cl$ wurden Filamente erhalten, die eine Festigkeit von 60 cN/tex bei einer Bruchdehnung von 8% (DP 600) und die - aufgrund der Änderung der Morphologie - eine sehr starke Fibrillierung aufweisen.

In überraschender Weise wurde nun gefunden, dass auch Filamente existieren, die über eine hohe Festigkeit (52,7 bis 66 cN/tex) und eine Bruchdehnung von 6 bis 13% verfügen und die gegenüber Filamenten, mit üblichen Werten für Festigkeit und Dehnung für textile Anwendungen, keine geänderte Morphologie aufweisen und daher eine Fibrillierung aufweisen, wie sie auch für den textilen Einsatz geeignete Filamente haben, bzw. deren Fibrillierung sogar geringer ist als die letzterer Filamente.

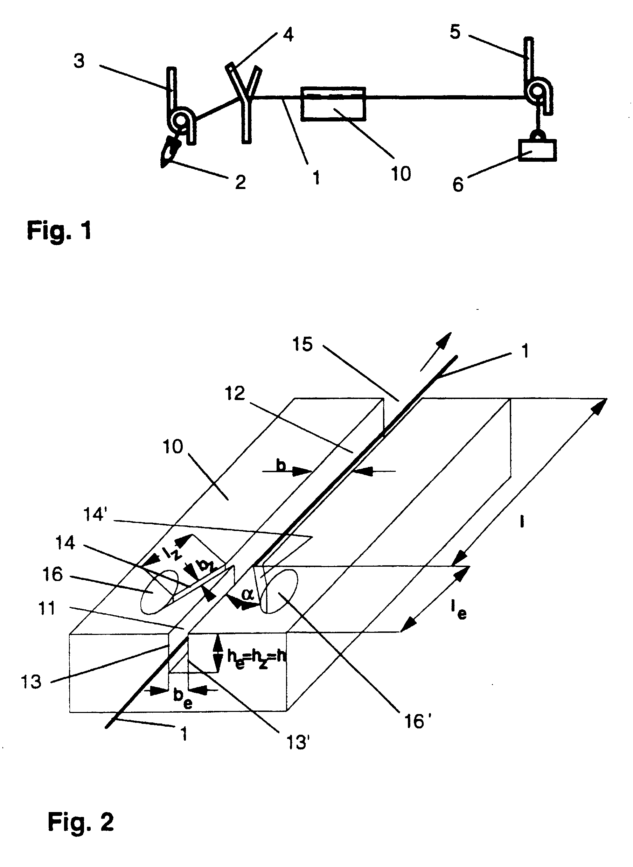

Ein Maß für die Fibrillierungsneigung der Filamente stellt die spezifische Reißzeit in s/tex dar. Je höher der Wert dieser Größe ist, desto geringer ist die Fibrillierung des Filaments. Zur Messung der Reißzeit wird, wie in Figur 1 dargestellt, ein Bündel 1 aus 50 Filamenten, das an einem Ende mit einer Fadenklemme 2 fixiert ist, durch einen Fadenführer 3 geführt. Das Bündel 1 wird mit einem Y-Stück 4 in Bezug auf einen Ejektor 10 lagemäßig ausgerichtet. An den Ejektor 10 schließt sich ein Fadenführer 5 an, mit dem eine Umlenkung des Bündels 1 erfolgt, das an seinem zweiten Ende mit einem Gewicht 6 von 20 Gramm belastet wird. Der Abstand zwischen dem ersten Fadenführer 3 und dem Y-Stück 4, sowie zwischen dem Y-Stück 4 und dem Ejektoreintritt, beträgt jeweils ca. 3 cm. Der Abstand zwischen Ejektoraustritt und dem zweiten Fadenführer 5 beträgt etwa 11 cm. Der Ejektor 10 hat eine Länge von 22 mm.

Wie in Figur 2 perspektivisch dargestellt, weist der Ejektor 10 einen Eintrittsspalt 11 mit quadratischem Querschnitt für das Bündel 1 auf. Die Breite $b_e$ und die Höhe $h_e$ des Eintrittsspalts 11 betragen 1 mm. Im Abstand $l_e$ von 8 mm vom Eintrittsspalt 11 weist der sich durch den gesamten Ejektor 10 erstreckende Fadenkanal 12 in den beiden Seitenwänden 13, 13' sich gegenüberliegende Flüssigkeitszuführkanäle 14, 14' auf. Durch diese Flüssigkeitszuführkanäle 14, 14' strömt Wasser mit einer Temperatur von etwa 25°C unter einem Winkel α von 15° relativ zur Achse des Bündels 1. Das Wasser fließt mit einem Volumenstrom von insgesamt 45 l/h in den Fadenkanal 12 und tritt am Austrittsspalt 15 aus dem Ejektor 10 aus. Die Breite $b_z$ der Flüssigkeitszuführkanäle 14, 14' beträgt 0,6 mm und ihre Höhe $h_z$ 1 mm. Die Länge $l_z$ der Zuführkanäle 14, 14' beträgt 6 mm. Die Breite b des Fadenkanals 12 von der Einmündung der Flüssigkeitszuführkanäle 14, 14' bis zum Austrittsspalt 15 beträgt 1,2 mm. Die Höhe h beträgt 1 mm. Die Speisung mit Wasser erfolgt durch Bohrungen 16, 16' mit einem Durchmesser von 4 mm von der Unterseite des Ejektors 10. Der Ejektor 10 ist von oben mit einem nicht dargestellten, plan aufliegenden Deckel verschlossen.

Zur Bestimmung der Reißzeit wird das Filamentbündel 1 gemäß Figur 1 in die Vorrichtungteile eingelegt und mit dem Gewicht belastet. Die Wasserzuführung in dem Ejektor 10 stellt den Beginn der Zeitmessung dar. Die Zeitmessung wird zu dem Zeitpunkt beendet, in dem das Gewicht herabfällt, d.h. wenn das Bündel durchreißt. Für jedes Beispiel wurden 10 Einzelmessungen durchgeführt, und die angegebenen Daten für die Reißzeit stellen jeweils Mittelwerte aus diesen 10 Messungen dar. Zur Normierung wird die gemessene Zeit auf den Filamenttiter bezogen (spezifische Reißzeit in s/tex).

Die Festigkeit und Dehnung wurden anhand des Kraft-Dehnungs-Verhaltens an einzelnen Filamenten unter klimatisierten Bedingungen (T = $(21^{+4}_{-2})$°C, relative Feuchtigkeit (65 ± 5%)) mit dem Prüfgerät Fafegraph (Firma Textechno) bestimmt. Die Einspannlänge betrug 20 mm und die Prüfgeschwindigkeit 20 mm/min ausgehend von einer Vorspannungvon 1 cN/tex. Der Fafegraph verfügt über pneumatische Klemmen aus Hartgummi/Vulkollan einer Fläche von ca. 4 mm x 6 mm.

Unmittelbar vor dem Zugversuch wurde eine Feinheitsmessung mit dem Gerät Vibromat (Firma Textechno) an jedem Filament durchgeführt, so daß den Zugprüfdaten eines Filamentes die Feinheit dieses Filaments zugeordnet wurde. Beim Vibromat betrug die feinheitsbezogene Vorspannung ebenfalls 1 cN/tex.

Die Erfindung wird im weiteren anhand von Beispielen näher erläutert und beschrieben.

Lösungsmittelgesponnene cellulosische Filamente wurden hergestellt, indem eine Lösung aus Cellulose in dem tertiären Amin-N-oxid-NMMO und Wasser, der Gallussäurepropylester als Stabilisator zugesetzt war, durch eine Spinndüsenplatte mit 50 Düsenbohrungen extrudiert wurde.

In den Beispielen 1 bis 9 wurde zur Lösungsherstellung der Südkiefer-Zellstoff Ultranier-J(ITT-Rayonier) mit einem Polymerisationsgrad (DP) von 1360 eingesetzt. In dem Vergleichsbeispiel 10, das Filamente repräsentiert, wie sie für übliche textile Anwendungen bekannt sind, wurde der Zellstoff Viscokraft VHV (International Paper Company), einem Vorhydrolyse-Kraft-Zellstoff aus Harthölzern mit einem DP von 1667 eingesetzt.

Nach Verlassen der Spinndüse wurden die Filamente in einem Luftspalt mit einer Länge von 17,5 cm mit Luft, die mit einer Geschwindigkeit von 0,8 m/s im rechten Winkel zu den Filamenten strömte, gekühlt. Die Cellulose wurde in einem wäßrigen Fällbad der Tiefe 40 mm gefällt und durch eine Waschstrecke geleitet, um NMMO zu entfernen. Die nach dem Waschen aufgetragene überschüssige Avivage (2% K 7451 in Wasser, vertrieben von Firma Stockhausen GmbH, Krefeld) wurde in einer Quetschstufe zwischen zwei Rollen von den Filamenten abgestreift. Anschließend wurden die Filamente getrocknet und aufgewickelt.

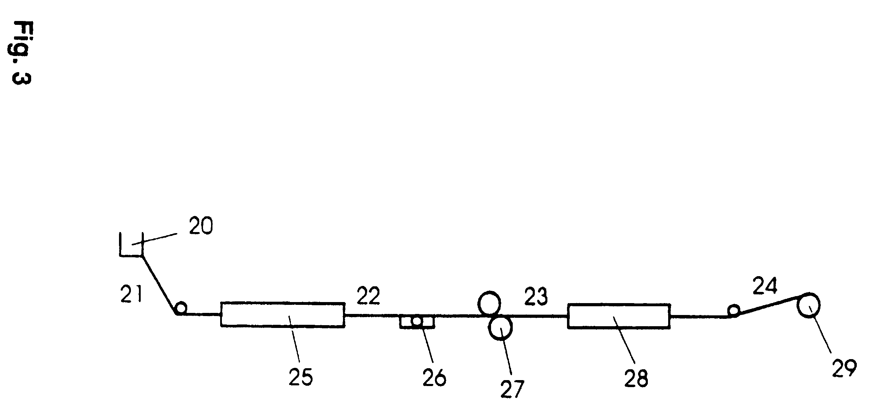

Nach Austritt der Filamente aus dem Koagulationsbad wurde die Fadenspannung an mehreren Positionen bestimmt. Diese sind in Figur 3 schematisch dargestellt:

- Position 21: Zwischen dem Koagulationsbad 20 und der Waschstrecke 25
- Position 22: Zwischen der Waschstrecke 25 und dem Auftragen der Avivage 26
- Position 23: Zwischen der Quetschstufe 27 und der Trockenstrecke 28
- Position 24: Vor der Aufwicklung 29.

Die Fadenspannung wurde mit dem Meßgerät Tensiomin Typ Bn 135.205.2 und dem Meßfühler 100 cN Typ Bn 125.126.1 (Firma Kurt Honigmann) gemessen.

Die weiteren Versuchsbedingungen und Eigenschaften der gemäß den Beispielen 1 bis 9 und dem Vergleichsbeispiel 10 erhaltenen Filamente sind in Tabelle I zusammengestellt.

EP 0 797 694 B2

**Tabelle I**

| Beispiel | 1 | 2 | 3 | 4 | 5 | 6 | 7 | 8 | 9 | 10 |
|---|---|---|---|---|---|---|---|---|---|---|
| Polymerisationsgrad DP | 1360 | 1360 | 1360 | 1360 | 1360 | 1360 | 1360 | 1360 | 1360 | 1667 |
| Cellulosegehalt c/Gew.% | 12,0 | 12,0 | 12,0 | 12,0 | 12,8 | 12,4 | 12,4 | 13,0 | 13,0 | 9,8 |
| Wassergehalt/Gew.% | 10,5 | 10,5 | 10,5 | 10,5 | 9,9 | 10,4 | 10,4 | 10,0 | 10,0 | 11,5 |
| NMMO-Gehalt/Gew.% | 77,46 | 77,46 | 77,46 | 77,46 | 77,17 | 77,16 | 77,16 | 76,96 | 76,96 | 78,6 |
| Stabilisatorgehalt/Gew.% | 0,04 | 0,04 | 0,04 | 0,04 | 0,13 | 0,04 | 0,04 | 0,04 | 0,04 | 0,1 |
| Spinntemperatur/°C | 112 | 112 | 112 | 112 | 119 | 120 | 120 | 118 | 120 | 112 |
| Düsenlochdurchmesser/µm | 200 | 200 | 200 | 200 | 200 | 130 | 130 | 130 | 130 | 130 |
| Luftspalttemperatur/°C | 37 | 37 | 37 | 37 | 24 | 25 | 25 | 10 | 37 | 16 |
| Rel. Feuchte/% | 19,3 | 19,3 | 19,3 | 19,3 | 9,8 | 8,2 | 8,2 | 12,6 | 10,0 | 10,0 |
| Koagulationsbadtemperatur/°C | 11 | 12 | 12 | 13 | 30 | 30 | 30 | 9 | 11 | 30 |
| Fadenspannung/cN | | | | | | | | | | |
| Position 21 | 28 | 40 | 30 | 38 | 40 | 36 | 36 | 33 | 38 | 28 |
| Position 22 | 12 | 25 | 14 | 22 | 40 | 17 | 15 | 10 | 16 | 17 |
| Position 23 | 5 | 8 | 79 | 88 | 34 | 82 | 34 | 79 | 84 | 6 |
| Position 24 | 8 | 10 | 88 | 90 | 36 | 91 | 36 | 88 | 93 | 11 |
| Aufwickelgeschwindigkeit w/(m/min) | 420 | 420 | 420 | 420 | 175 | 350 | 175 | 350 | 258 | 420 |
| $K=DP^{0,5}\cdot(c/\%)\cdot(w/(m/min))^{-0,075}$ | 281 | 281 | 281 | 281 | 320 | 295 | 310 | 309 | 316 | 254 |
| Filamenttiter/dtex | 1,47 | 1,49 | 1,95 | 1,64 | 1,61 | 1,57 | 1,59 | 1,51 | 1,57 | 1,36 |
| Festigkeit/(cN/tex) | 53,2 | 53,8 | 58,6 | 65,6 | 53,3 | 52,7 | 53,9 | 55,6 | 57,1 | 43,8 |
| Bruchdehnung/% | 13,0 | 9,7 | 7,4 | 6,3 | 9,0 | 7,3 | 9,0 | 8,2 | 7,9 | 8,9 |
| Spez. Reißzeit/(s/tex) | 374 | 370 | 304 | 335 | 621 | 369 | 767 | 444 | 634 | 257 |

In zwei weiteren Beispielen wurden lösungsmittelgesponnene cellulosische Filamente mit einer Spinndüse erzeugt, die lediglich über eine Düsenbohrung mit einem Durchmesser von 130 µm verfügt. Die Spinntemperatur betrug

4

100°C. Die Filamente wurden im Luftspalt einer Länge von 15 cm mit unbewegter Luft einer Temperatur von 25°C gekühlt. Im Anschluß an das auf 18°C gehaltene Koagulationsbad wurden die Filamente gewaschen, aviviert (1% Leomin in Wasser, vertrieben von Firma Hoechst AG) und getrocknet. Zwischen Spinndüse und Aufwicklung wurde ein Verstreckverhältnis von 1 : 13 eingestellt. Die Spinngeschwindigkeit betrug 48 m/min. Zur Bestimmung der spezifischen Reißzeit wurden aus den Endlosfilamenten Bündel aus 50 Einzelfilamenten hergestellt.

Für das Beispiel 11 wurde, wie für die Beispiele 1 bis 9, der Zellstoff Ultranier-J (DP 1360) eingesetzt. Die Lösung wies eine Cellulosekonzentration von 10 Gew.% auf. Wasser und NMMO lagen mit 11,5 Gew.% bzw. 78,4 Gew.% vor. Die Konzentration an Gallussäure Propylester betrug 0,1 Gew.%.

Zur Herstellung von Filamenten gemäß Beispiel 12 (Vergleichsbeispiel) wurde als Zellstoff Viscokraft 4.3 der Firma International Paper Company mit einem Polymerisationsgrad von 650 in einer Konzentration von 12,7 Gew.% eingesetzt. Die Wasserkonzentration betrug 9,0 Gew.%. NMMO lag in einer Menge von 78,2 Gew.% und Gallussäurepropylester mit 0,1 Gew.% vor. Die Eigenschaften der gemäß dem Beispiel 11 und dem Vergleichsbeispiel 12 hergestellten Filamente sind in Tabelle II enthalten.

Tabelle II

| Beispiel | 11 | 12 |
|---|---|---|
| Filamenttiter/dtex | 1,2 | 1,8 |
| Festigkeit/(cN/tex) | 52,8 | 36,4 |
| Bruchdehung/% | 13,0 | 11,7 |
| Spez. Reißzeit/(s/tex) | 1000 | 250 |

Anhand der Tabellen I und II wird deutlich, daß die Filamente gemäß den Vergleichsbeispielen 10 und 12 über eine spezifische Reißzeit von 257 bzw. 250 s/tex verfügen. Ihre Festigkeit von 43,8 bzw. 36,4 cN/tex und ihre Bruchdehung von 8,9 bzw. 11,7% liegen in einem Bereich, wie er für lösungsmittelgesponnene cellulosische Filamente für textile Anwendungen üblich ist. In überraschender Weise verfügen die erfindungsgemäßen Filamente (Beispiel 1 bis 9 und 11) über eine hohe Festigkeit bei einer Bruchdehung, die mit der der Vergleichsbeispiele 10 und 12 vergleichbar ist. Insbesondere zeigen sie nicht den gemäß dem vorgenannten Stand der Technik vorliegenden Nachteil der sehr starken Fibrillierung. Im Gegenteil ist die Neigung zur Fibrillierung bei den erfindungsgemäßen Filamenten sogar deutlich (bis zu einem Faktor von 4) gegenüber den Filamenten der Vergleichsbeispiele reduziert. Die erfindungsgemäßen Filamente vereinen damit eine für technische Einsatzgebiete gewünschte hohe Festigkeit bei geringer Neigung zur Fibrillierung, wodurch sie auch für textile Einsatzgebiete sehr geeignet sind.

Darüberhinaus sind die erfindungsgemäßen Filamente wirtschaftlich herstellbar, und die Nachteile zum Erreichen einer hohen Festigkeit im Stand der Technik, wie die Zugabe von Salzen zur Celluloselösung, können in vorteilhafterweise vermieden werden. Für die Herstellung der erfindungsgemäßen Filamente sind zum einen der Polymerisationsgrad der zur Lösungsherstellung eingesetzten Cellulose und deren Konzentration in der Lösung, sowie die Aufwickelgeschwindigkeit der Filamente entscheidend. Um erfindungsgemäße Filamente herzustellen, werden der Polymerisationsgrad DP, die Cellulosekonzentration c in % und die Aufwickelgeschwindigkeit w in m/min so eingestellt, daß die Größe K, die von diesen drei Größen abhängig ist und deren Wert sich nach der Gleichung:

$$K = DP^{0,5} \cdot c \cdot w^{-0,075}$$

berechnet, größer als 259 ist. Die Werte von K sind für die Beispiele 1 bis 10 in Tabelle I angegeben. Für das erfindungsgemäße Beispiel 11 beträgt diese Größe 276, während ihr Wert für das Vergleichsbeispiel 12 nur 229 beträgt.

Darüberhinaus sind aber zur Herstellung erfindungsgemäßer Filamente auch noch folgende Verfahrensparameter von Bedeutung. Zur Erreichung einer möglichst hohen Festigkeit sollte der zur Lösungsherstellung eingesetzte Zellstoff einen möglichst hohen Anteil an $\alpha$-Cellulose besitzen, wie der in den Beispielen 1 bis 9 und 11 eingesetzte Südkiefer-Zellstoff. Beispielsweise konnte bei der Herstellung von Filamenten gemäß Beispiel 10 mit einem Zellstoff mit höhrerem DP als der des Südkiefer- Zellstoffs nicht die gewünschte Festigkeit erreicht werden.

Neben diesen Einflußgrößen haben ebenfalls die Temperatur des Koagulationsbades sowie die Fadenspannung an der Position 23, d.h. in der Trockenstrecke 28 einen Einfluß auf die Festigkeit.

So wurde gefunden, daß zur Erreichung einer hohen Festigkeit die Temperatur des Koagulationsbades möglichst niedrig sein sollte. Bei den Beispielen 5, 6 und 7, bei denen die Koagulationsbadtemperatur 30 °C betrug, resultierten Festigkeiten in Höhe von 53,3, 52,7 bzw. 53,9 cN/tex. Trotz niedrigerer Cellulosekonzentration resultierte bei Beispiel 3 mit einer Koagulationsbadtemperatur von 12 °C eine Festigkeit von 58,6 cN/tex.

Durch Erhöhung der Fadenspannung an der Position 23 läßt sich ebenfalls eine Erhöhung der Festigkeit erreichen. Wie die Beispiele 2 und 3 zeigen, läßt sich durch Erhöhung der Fadenspannung an der Position 23 bei ansonsten in etwa vergleichbaren Versuchsbedingungen die Festigkeit der Filamente erhöhen. Hohe Festigkeiten sind auch erreichbar, wenn eine niedrige Temperatur des Koagulationsbades gewählt wird, und eine hohe Fadenspannung an der Position 23 vorliegt, wie die Beispiele 3, 4 und 9 zeigen. Bei Beispiel 6, bei dem zwar auch eine Fadenspannung in der Größenordnung der Beispiele 3, 4 und 9 vorlag, bei dem aber eine wesentlich höhere Koagulationsbadtemperatur vorlag, resultierte demgegenüber eine niedrige Festigkeit der Filamente.

Die Bruchdehnung der Filamente nimmt demgegenüber durch die Erhöhung der Fadenspannung an der Position 23 ab. Des weiteren wurde gefunden, daß eine Erhöhung der Bruchdehnung durch Verringerung der Fadenspannung im Bereich der Waschstrecke und vor dem Auftragen der Avivage (Position 22) erreicht werden kann. So beträgt die Bruchdehnung der Filamente gemäß Beispiel 1 13%, wobei die Fadenspannung an der Position 22 12 cN und an der Position 23 5 cN betrug. Bei Beispiel 8 resultierte demgegenüber eine Bruchdehnung von 8,2%. Dabei betrug die Fadenspannung an der Position 22 zwar nur 10 cN, aber an der Position 23 lag eine Fadenspannung von 79 cN vor.

## Patentansprüche

1. Lösungsmittelgesponnene cellulosische Filamente aus einer Lösung von Cellulose in einem tertiären Amin-N-oxid und gegebenenfalls Wasser mit einer Festigkeit von 52,7 bis 66 cN/tex, einer Bruchdehnung von 6 bis 13% und einer spezifischen Reißzeit von 300 bis 1000 s/tex.

2. Lösungsmittelgesponnene cellulosische Filamente nach Anspruch 1, **dadurch gekennzeichnet, daß** ihre Bruchdehnung 6 bis 9,7% beträgt.

3. Lösungsmittelgesponnene cellulosische Fliamente nach Anspruch 1 oder 2, **dadurch gekennzeichnet, daß** ihre Bruchdehnung 6 bis 9,5% beträgt.

4. Lösungsmittelgesponnene cellulosische Filamente nach einem der Ansprüche 1 bis 3, **dadurch gekennzeichnet, daß** ihre Bruchdehnung 6 bis 9 beträgt

5. Lösungsmittelgesponnene cellulosische Filamente nach einem der Ansprüche 1 bis 4, **dadurch gekennzeichnet, daß** die Cellulose ein Südkiefer-Zellstoff ist.

## Claims

1. Solvent-spun cellulose filaments from a solution of cellulose in a tertiary amine N-oxide and if necessary water with a strength of 52,7 to 66 cN/tex, an elongation at break of 6 to 13 % and a specific breaking time that amounts to 300 to 1000 s/tex.

2. Solvent-spun cellulose filaments according to claim 1, **characterized in that** their elongation at break amounts to 6 to 9.7%.

3. Solvent-spun cellulose filaments according to claim 1 or 2, **characterized in that** their elongation at break amounts to 6 to 9.5%.

4. Solvent-spun cellulose filaments according to one of claims 1 to 3, **characterized in that** their elongation at break amounts to 6 to 9%.

5. Solvent-spun cellulose filaments according to one of claims 1 to 4, **characterized in that** the cellulose is a southern pine chemical wood.

## Revendications

1. Filaments cellulosiques obtenus par filage d'une solution de cellulose dans un solvant constitué d'un N-oxyde d'amine tertiaire et éventuellement d'eau, présentant une résistance de 52,7 à 66 cN/tex, un allongement à la rupture de 6 à 13% et un temps de rupture spécifique qu'atteint 300 à 1000 s/tex.

**2.** Filaments cellulosiques selon la revendication 1, **caractérisés en ce quel** leur allongement à la rupture atteint 6 à 9,7%.

**3.** Filaments cellulosiques selon la revendication 1 ou 2, **caractérisés en ce quel** leur allongement à la rupture atteint 6 à 9,5%.

**4.** Filaments cellulosiques selon l'une quelconque des revendications 1 à 3, **caractérisés en ce quel** leur allongement à la rupture atteint 6 à 9%.

**5.** Filaments cellulosiques selon l'une quelconque des revendications 1 à 4, **caractérisés en ce que** la cellulose est une cellulose de bois de pin du Sud.

**Fig. 1**

**Fig. 2**

**Fig. 3**